Europäisches Patentamt

European Patent Office

Office européen des brevets

(19)

(11) Veröffentlichungsnummer: **0 094 674**
**B1**

(12) **EUROPÄISCHE PATENTSCHRIFT**

(45) Veröffentlichungstag der Patentschrift:
26.02.86

(51) Int. Cl.⁴: **F 16 C 29/06**

(21) Anmeldenummer: 83104829.3

(22) Anmeldetag: **17.05.83**

(54) **Wälzkörperführung.**

(30) Priorität: **19.05.82 DE 3218845**

(43) Veröffentlichungstag der Anmeldung:
**23.11.83 Patentblatt 83/47**

(45) Bekanntmachung des Hinweises auf die Patenterteilung:
**26.02.86 Patentblatt 86/9**

(84) Benannte Vertragsstaaten:
**CH DE FR GB IT LI SE**

(56) Entgegenhaltungen:
**DE - A - 2 620 864**
**DE - B - 1 258 670**
**DE - B - 1 425 120**
**DE - C - 955 010**
**DE - C - 2 121 847**
**DE - C - 2 264 100**
**US - A - 1 570 056**
**US - A - 3 467 447**

(73) Patentinhaber: **Firma Carl Zeiss, D-7920 Heidenheim (Brenz) (DE)**
(84) Benannte Vertragsstaaten: **CH DE FR IT LI SE**

(73) Patentinhaber: **CARL ZEISS-STIFTUNG HANDELND ALS CARL ZEISS, D-7920 Heidenheim (Brenz) (DE)**
(84) Benannte Vertragsstaaten: **GB**

(72) Erfinder: **Szenger, Franz, Dipl.-Ing. (FH), Wielandstrasse 14, D-7923 Königsbronn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Wölzkörperführung, bestehend aus einem Laufschuh, der mehrere Reihen in einem Teilabschnitt unter Last umlaufender Kugeln enthält.

Derartige, unter der Bezeichnung "Kugelumlaufschuh" bzw. "Kugelumlaufführung" bekannten Bauelemente finden für hochbelastbare Linearlager, u.a. im Maschinenbau Verwendung und sind beispielsweise aus der DE-B-14 25 120 oder der US-A-34 67 477 bekannt. In den dort beschriebenen Bauelementen ist für jede Reihe Kugeln eine separate Führung vorgesehen, so daß die Kugelreihen durch einen gewissen Abstand voneinander getrennt sind. Aus der DE-C-21 21 847 und der DE-C-22 64 100 sind außerdem Rollenumlaufschuhe bekannt, die einen ähnlichen Aufbau wie die vorstehend genannten Kugelumlaufschuhe besitzen, jedoch anstelle der Kugeln Rollen enthalten.

Kugelumlaufschuhe besitzen gegenüber Rollenumlaufschuhen den Vorteil, daß kein sogenanntes "Radieren" auftritt, d.h. ein gleitendes, achsiales Versetzen, der in der Regel nicht exakt parallel zur Führungsrichtung laufenden Rollen gegenüber den Laufbahnen.

Kugelumlaufführungen sind allerdings gegenüber Rollenumlaufführungen geringer belastbar wegen den bei gleichen Abmessungen des Schuhes kleineren tragenden Flächen der Kugeln. Für Anwendungen, bei denen es in erster Linie auf die hohe Belastbarkeit der Wälzkörperführung ankommt, werden daher vorzugsweise Rollenumlaufschuhe eingesetzt.

Sowohl bei Rollenumlaufschuhen als auch bei Kugelumlaufschuhen tritt ein Problem auf, das ihre Verwendung für hochgenaue Aufgabenbereiche, beispielsweise zur Führung verschieblicher Teile in Meß-maschinen, einschränkt. Es besteht darin, daß ein periodischer Ablauffehler in der Größenordnung bis zu mehreren μm auftritt, der durch das Einlaufen einer Kugel oder Rolle vom Umlenkbereich in den Lastbereich und der damit verbundenen Änderung der tragenden Fläche verursacht wird. Dieser Ablauffehler wird noch vergrößert durch das Bestreben der Kugeln in den separat geführten Reihen sich beim Betrieb des Schuhes zu "synchronisieren", d.h. die Kugeln aller Reihen laufen gleichzeitig in den Lastbereich ein bzw. aus.

Aus der DE-C-21 21 847 ist es für Rollenumlaufschuhe bekannt, den Übergang in den Lastbereich als federnden Lappen auszubilden, der von den einlaufenden Rollen elastisch nach oben gebogen wird und damit eine Einlaufschräge bildet. Mit dieser Maßnahme wird jedoch nur bei größerer Belastung des Rollenumlaufschuhes, wenn eine nennenswerte Biegung des Lappens auftritt, eine Verbesserung des Einlaufverhaltens erzielt.

Aus der DE-C-22 64 100 und der DE-A-26 20 864 ist es bekannt, den Einlaufbereich der Rollen in Rollenumlaufschuhen mit einer flachen Abschrägung zu versehen. Diese Schräge hat dort jedoch die Aufgabe, den Fluß der Rollen im Einlaufbereich zu verzägern; ihr Anstellwinkel ist dementsprechend groß gewählt. Auch bei diesen bekannten Umlaufschuhen tritt daher der vorstehend genannte Ablauffehler auf.

In der US-A-15 70 056 ist ein Radiallager mit mehreren einander berührenden Kugelreihen bekannt, die zu zwei Gruppen angeordnet sind. Ein Bezug zu den vorstehend genannten Problemen, die bei Linearlagern in Form von Kugelumlaufschuhen auftreten, ist dieser Schrift jedoch nicht zu entnehmen.

Es ist die Aufgabe der vorliegenden Erfindung eine Wälzkörperführung der eingangs genännten Art, d.h. einen Kugelumlaufschuh so auszubilden, daß er bezogen auf seine Abmessungen eine möglichst hohe Belastbarkeit besitzt.

Diese Aufgabe wird gemäß dem Kennzeichen des Hauptanspruchs dadurch geläst, daß die Kugeln in benachbarten Reihen stets um die Länge eines Kugelradius gegeneinander versetzt und einander berührend angeordnet sind.

Bei den erfindungsgemäß ausgebildeten Kugelumlaufschuhen wird auf eine separate Führung der Kugelreihen verzichtet. Die Kugeln einzelner Reihen werden vielmehr direkt durch die Kugeln aus benachbarten Reihen geführt, da sie aufgrund der gewählten, dichten Packung nicht ausweichen kännen. Obwohl benachbarte Kugeln daher einander berühren, tritt doch keine nennenswerte Reibung auf, die sich auf den Einsatz der Führung nachteilig auswirken würde.

Wegen der dichtestmäglichen Packung der tragenden Kugeln ergibt sich bezogen auf die Abmessungen des Schuhes eine hächstmögliche Belastbarkeit und Steifigkeit. Vergleicht man dagegen ein derartiges Lager mit herkämmlichen Kugelumlaufschuhen bei gleicher Belastung, so ergibt sich eine sehr viel hähere Lebensdauer aufgrund des geringeren Druckes pro tragender Kugel. Die gräßere Anzahl der tragenden Kugeln bewirkt außerdem eine bessere Integration der Mikrogeometrie der Lauffläche, was sich positiv auf die Laufruhe des Schuhes auswirkt. Der eingangs erwähnte Effekt der "Synchronisation" wirkt sich nur auf die Hälfte der Kugelreihen aus.

Um ein Herausfallen der Kugeln auf der Tragseite des Umlaufschuhes zu verhindern, ist es zweckmäßig, dort zwischen den Kugelreihen gespannte Drähte oder Fäden z. B. aus Nylon anzubringen. Diese Drähte dienen der besseren Handhabung des Lagers beim Transport und beim Zusammenbau. Im eingebauten Zustand sind sie dagegen ohne Funktian. Anstelle der Fäden kann auch eine dünne Abdeckkappe aus Blech verwendet werden, die nach dem Einbau des Lagers entfernt wird.

Es ist weiterhin vorteilhaft, wenn der Tragkärper des Laufschuhes aus einer an beiden Enden des Laufbereichs abgerundeten, ebenen Platte besteht, die im Einlaufbereich bzw. Auslaufbereich etwa auf die Länge eines Kugeldurchmesser seine flache Abschrägung besitzt. Der Winkel unter dem diese Abschrägung gegen die Lauffläche des Umlaufschuhes geneigt ist, sollte etwa dem Verhältnis der bei Nennlast auftretenden Abplattung der Kugeln der Führung zum Durchmesser der Kugeln entsprechen. Dadurch ist sichergestellt, daß der Druck auf die einlaufende Kugel nicht abrupt sondern langsäm zunimmt b:w. beim Auslaufen abnimmt. Der bekannten Kugelumlaufschuhen anhafteten, kurzperiodische Gleichlauffehler bedingt durch das plötzliche Eintreten und Austreten der Kugeln aus dem Laufbereich wird somit vermieden.

Weitere Vorteile der Erfindung sind in der nachfolgenden Beschreibung der Fig. 1-5 der beigefügten Zeichnungen erläutert:

Fig. 1 zeigt einen Kugelumlaufschuh gemäß der Erfindung in Aufsicht von der Tragseite her gesehen,

Fig. 2 ist ein Teilschnitt des Schuhes aus Fig. 1 längs der Linie II-II in Fig. 1,

Fig. 3 zeigt einen Schnitt des Schuhes aus Fig. 1 längs der Linie III-III in Fig. 1 bzw. Fig. 2,

Fig. 4 ist eine detailliertere Darstellung des Einlaufbereichs des Schuhes aus Fig. 2,

Fig. 5 stellt den vertikalen Gleichlauf fehler bekannter Kugelumlauf-schuhe (Fig. 5b) und den eines erfindungsgemäßen Kugelumlaufschuhes (Fig. 5a) in Abhängigkelt von seiner Stellung in Führungsrichtung dar.

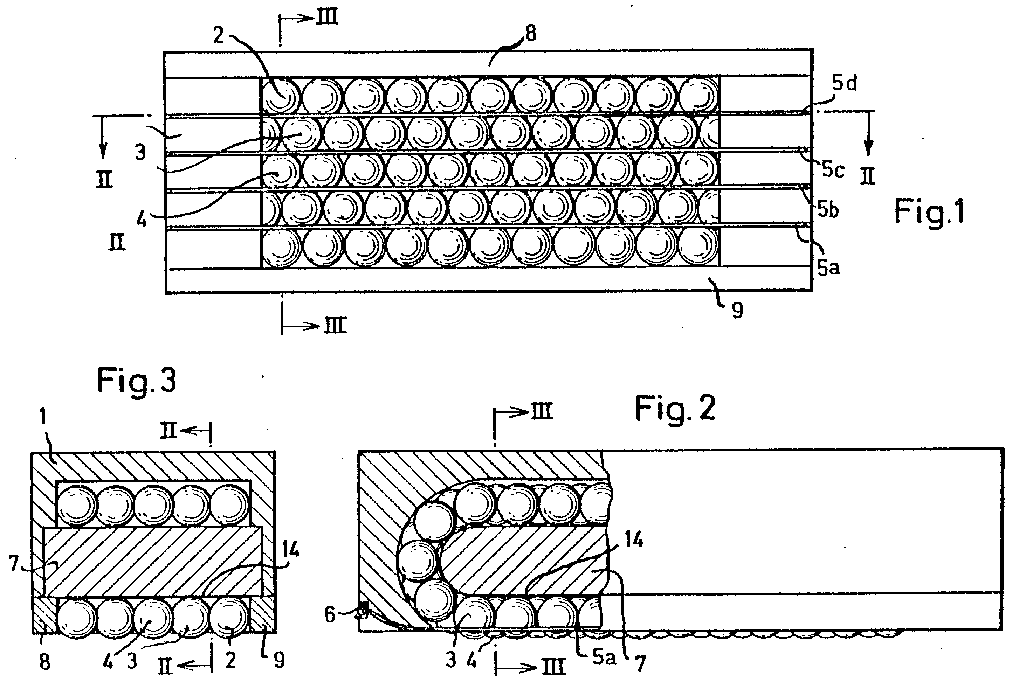

Der in den Fig. 1-3 dargestellte Kugelumlaufschuh besteht aus einem unten offenen, quaderförmigen Gehäuse 1, in dessen Innenraum eine flache Tragplatte 7 mit ihrer Schmalseite an den beiden Seitenwänden des Gehäuses 1 befestigt ist. Zwischen den abgerundeten, stirnseitigen Enden der Tragplatte 7 und den ebenfalls abgerundeten Innenseiten der gegenüberliegenden Wandung des Gehäuses 1 befindet sich ein Durchgang für die zwischen der Unterseite der Tragplatte 7 und der nicht dargestellten Führung unter Last und im Inneren des Gehäuses 1 unbelastet, endlos umlaufenden Kugeln.

Diese Kugeln sind in fünf Laufreihen derart dicht gepackt angeordnet, daß die einzelnen Kugeln z.B. die Kugeln 2,3 und 4 benachbarter Reihen in Laufrichtung jeweils um einen Kugeldurchmesser gegeneinander versetzt aneinander anliegen. Der Laufbereich wird seitlich durch zwei Leisten 8 und 9 begrenzt. Innerhalb dieses Laufbereichs werden die Kugeln einer Reihe jeweils durch die beiden benachbarten Reihen geführt, an denen sie anliegen.

Vier Nylonbänder 5a-d, die in Lauf richtung zwischen den Kugelreihen gespannt sind, verhindern ein Herausfallen der Kugel n aus dem Kugelumlaufschuh. Die verdickten Enden dieser Bänder 5a-d liegen in zwei senkrecht zur Laufrichtung angeordneten Nuten 6, in denen sie infolge der Eigenspannung der Bänder 5a-d eingerastet sind.

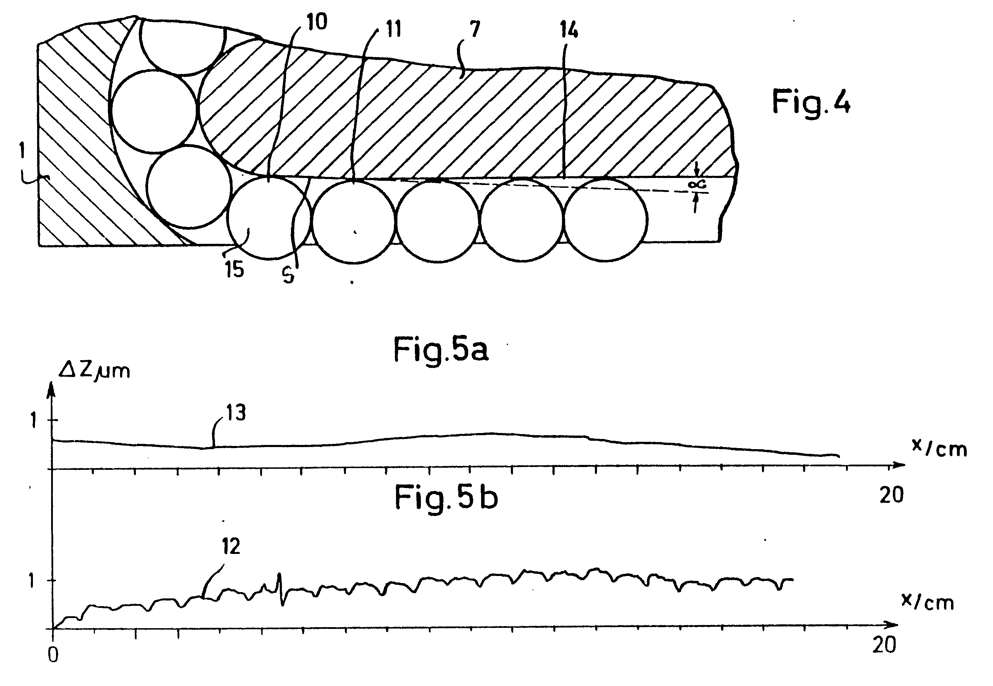

Wie Fig. 4 zeigt ist die Unterseite 14 der Tragplatte 7 auf einer Länge von ca. einem Kugeldurchmesser in einem Bereich 5, der sich direkt an die abgerundete Stirnseite der Tragplatte 7 anschließt, zwischen den mit 10 und 1 1 bezei chneten Punkten gegen die Lauf f läche abgeschrägt. Der Neigungswinkel α dieser Abschrägung ist so gewöhlt, daß die sich am Punkte 15 befindliche, einlaufende Kugel bei Nennbelastung des Umlaufschuhes gerade noch keine Hertz'sche Pressung er fährt. Unter Zugrundelegung der Kenndaten für gängige Materialien ist dieser Winkel kleiner als 1°. Die Tragplatte 7 besitzt auch an dem nicht dargestellten, entgegengesetzten Ende im Auslaufbereich des Lagers eine solche Schräge S.

In Fig. 5a gibt der Graph 13 den vertikalen Gleichlauffehler eines mit der Schräge S versehenen Kugelumlauf schuhs wieder. Dieser Ablauffehler besitzt ein durch die Führung bedingtes, rein lang periodisches Verhalten.

Dagegen zeigt der in Fig. 5b für einen herkömmlichen Kugelumlaufschuh aufgenommene Graph 12 einen von kurzperiodischen "Zacken" überlagerten Verlauf. Diese "Zacken" werden jeweils durch den abrupten Eintritt bzw. Austritt einer Kugel in bzw. aus dem Laufbereich verursacht.

## Patentansprüche:

1. Wälzkörperführung, bestehend aus einem Lauf schuh, der mehrere Reihen in einem Teilabschnitt unter Last umlaufender Kugeln enthält, dadurch gekennzeichnet, daß die Kugeln (2,3,4) benachbarter Reihen stets um die Länge eines Kugelradius in Lauf richtung gegeneinander versetzt und einander berührend angeordnet sind.

2. Wälzkärperführung nach Anspruch 1, gekennzeichnet durch an der Tragseite des Laufschuhes zwischen den Kugelreihen gespannte Drähte bzw. Fäden (5a-d).

3. Wälzkörperführung nach Anspruch 1 oder 2, dadurch gekennzeichnet, daßder Tragkärper des Laufschuhes aus einer an den beiden Enden des Laufbereichs abgerundeten, ebenen Platte (7) besteht, die im Einlauf - bzw. Auslaufbereich etwa auf die Länge eines Kugeldurchmessers eine flache Abschrägung (S) besitzt.

4. Wälzkörperführung nach Anspruch 3, dadurch gekennzeichnet, daß der Winkel (α), unter dem die Abschrägung (S) gegen die Lauffläche (14) geneigt ist, etwa dem Verhältnis der bei Nennlast auftretenden Abplattung der Kugeln des Lagers zum Durchmesser der Kugeln entspricht.

## Claims:

1. Guide means with rolling elements consisting of a travel shoe having plural rows af balls rotating under load in a partial section thereof, characterized by the fact that the balls (2, 3, 4) of adjacent rows are always staggered in direction of travel with respect to each other by a length equal to the radius of a ball and are in contact with each other.

2. Guide means according to claim 1, characterized by wires or threads (5a, 5b, 5c, 5d) tensed between the rows of balls on the support side of the travel shoe.

3. Guide means according to claims 1-2, characterized by the fact that the support body of the travel shoe comprises a flat plate (7) which is rounded at the two ends of the travel region and has a flat bevel (S) approximately over a length equal to the diameter of a ball in the inlet and outlet regions, respectively.

4. Guide means according to claim 3, characterized by the fact that the angle ($\alpha$) by which the bevel (S) is inclined to the travel surface (14) corresponds approximately to the ratio between the flattening of the balls of the bearing which takes place at the rated load, and the diameter of the balls.

## Revendications

1. Chemin de circulation d'éléments de roulement, constitué d'un patin à roulement qui contient plusieurs rangées de billes circulant sous charge sur une partie de leur trajet, caractérisé en ce que les billes (2,3,4) de rangées voisines sont disposées en étant toujours décalées mutuellement de la longueur d'un rayon de bille dans le sens de circulation et en contact les unes avec les autres.

2. Chemin selon la revendication 1, caractérisé par des fils métalliques ou autres (5a-d) tendus entre les rangées de billes sur le côté portant du patin.

3. Chemin selon la revendication 1 ou 2, caractérisé en ce que le corps porteur du patin est formé d'une plaque plane (7) arrondie aux deux extrémités du trajet de circulation et qui possède dans les régionsd'entrée et de sortie de la zone de charge une partie faiblement inclinée (S) dont la longueur correspond à peu près au diamètre des billes.

4. Chemin selon la revendication 3, caractérisé en ce que l'angle ($\alpha$) sous lequel la partie inclinée (S) est inclinée par rapport à la surface de circulation (14) correspond approximativement au rapport entre l'aplatissement des billes du palier à la charge nominale et le diamètre des billes.

Fig.1

Fig.3

Fig.2

0 094 674

0 094 674

10   11   7   14

**Fig.4**

1

∝

15   S

**Fig.5a**

ΔZ μm

1

13

x/cm

20

**Fig.5b**

1

12

x/cm

0                    20